# EUROPEAN PATENT APPLICATION

(11) **EP 4 472 189 A1**
(43) Date of publication of application: **04.12.2024**
(21) Application number: 23856314.2
(22) Date of filing: 30.06.2023
(51) Int. Cl.: H04N 5/253

(54) **ELECTRONIC DEVICE, AND CAMERA MODULE AND CONTROL METHOD THEREOF**

(30) Priority: 24.08.2022 CN 202211015660
(71) Applicant: Huawei Technologies Co., Ltd., Shenzhen, Guangdong 518129 (CN)
(72) Inventor: YANG, Chuan, Shenzhen, Guangdong 518129 (CN); LIU, Qiaorong, Shenzhen, Guangdong 518129 (CN); WANG, Li, Shenzhen, Guangdong 518129 (CN); KUO, Li-Te, Shenzhen, Guangdong 518129 (CN)
(74) Representative: Gill Jennings & Every LLP
(86) International application number: PCT/CN2023/105342
(87) International publication number: WO 2024/041224

(57) **Abstract**

Embodiments of this application disclose an electronic device, a camera module, and a camera module control method, and relate to the field of image stabilization technologies, to resolve a decrease in imaging quality at four corner-fields of view of an image and deterioration of edge image quality that are caused during image stabilization compensation. The camera module includes a casing, and a camera assembly, a first image stabilization mechanism, and a second image stabilization mechanism that are all disposed in the casing. The camera assembly includes a lens group and an image sensor that are disposed opposite to each other in a direction parallel to the lens group. The first image stabilization mechanism is connected to the image sensor in a transmission manner and drives the image sensor to move in a direction perpendicular to an optical axis of the lens group or rotate around a direction of the optical axis of the lens group. The second image stabilization mechanism is connected to the camera assembly in a transmission manner and is configured to drive the camera assembly to move in the direction perpendicular to the optical axis of the lens group or rotate around the direction of the optical axis of the lens group. Both the first image stabilization mechanism and the second image stabilization mechanism perform shake compensation without changing a relative angle between the optical axis of the lens group and an optical axis of the image sensor, so that the foregoing problems are resolved.

## Description

This application claims priority to Chinese Patent Application No. 202211015660.8, filed with the China National Intellectual Property Administration on August 24, 2022 and entitled "ELECTRONIC DEVICE, CAMERA MODULE, AND CAMERA MODULE CONTROL METHOD", which is incorporated herein by reference in its entirety.

### TECHNICAL FIELD

This application relates to the field of image stabilization technologies, and in particular, to an electronic device, a camera module, and a camera module control method.

### BACKGROUND

An optical image stabilization (optical image stabilization, OIS) technology is a technology in which detection on mobile phone shakes is performed by using a gyroscope, and then a lens (lens) group is moved in an opposite direction by using an OIS motor, to compensate for an image blur caused by the mobile phone shakes during exposure in shooting a video or a photo. However, currently, in some common OIS technologies, a relative angle between an optical axis of the lens group and an optical axis of an image sensor (sensor) changes during image quality compensation. Due to an optical feature of the lens group, the change in the relative angle between the optical axis of the lens group and the optical axis of the image sensor causes a decrease in imaging quality at four corner-fields of view of the lens group and deterioration of edge image quality.

### SUMMARY

Embodiments of this application provide an electronic device, a camera module, and a camera module control method, to resolve problems in the conventional technology of a decrease in imaging quality at four corner-fields of view of an image and deterioration of edge image quality caused by a change in a relative angle between an optical axis of a lens group and an optical axis of an image sensor when the camera module performs image stabilization compensation.

To achieve the foregoing objective, the following technical solutions are used in this application.

According to a first aspect, an embodiment of this application provides a camera module. The camera module includes a casing, a camera assembly, a first image stabilization mechanism, and a second image stabilization mechanism. The camera assembly, the first image stabilization mechanism, and the second image stabilization mechanism are all disposed in the casing. The camera assembly includes a lens group and an image sensor. Both the lens group and the image sensor are disposed in the casing. In addition, the image sensor and the lens group are disposed opposite to and spaced from each other in a direction parallel to the lens group. The first image stabilization mechanism is connected to the image sensor in a transmission manner. The first image stabilization mechanism is configured to drive the image sensor to move in a direction perpendicular to an optical axis of the lens group or rotate around a direction of the optical axis of the lens group. The second image stabilization mechanism is connected to the camera assembly in a transmission manner. The second image stabilization mechanism is configured to drive the camera assembly to move in the direction perpendicular to the optical axis of the lens group or rotate around the direction of the optical axis of the lens group.

When the camera module performs image stabilization compensation, the first image stabilization mechanism only drives the image sensor to move in the direction perpendicular to the optical axis of the lens group or rotate around the direction of the optical axis of the lens group, and an optical axis of the image sensor and the optical axis of the lens group do not change. The second image stabilization mechanism only drives the camera assembly to move in the direction perpendicular to the optical axis of the lens group or rotate around the direction of the optical axis of the lens group. The entire camera assembly moves or rotates together, and the optical axis of the image sensor and the optical axis of the lens group do not change. Therefore, in an entire image stabilization compensation process, neither the optical axis of the image sensor in the camera module nor the optical axis of the lens group in the camera module changes. Therefore, a decrease in imaging quality at four corner-fields of view of the lens group and deterioration of edge image quality are avoided.

In some embodiments of this application, the camera module further includes a shake detection apparatus and a main control chip. The shake detection apparatus is mounted to an electronic device in which the camera module is located, and is configured to detect shake information of the electronic device in which the camera module is located. Specifically, the shake detection apparatus may be mounted to the casing of the camera module, or may be mounted to a main control circuit board in the electronic device. Because the casing of the camera module may be fastened to a housing of the electronic device, the shake detection apparatus mounted to the casing may also detect the shake information of the electronic device in which the camera module is located. In addition, the shake detection apparatus may be specifically an inertial sensor. The main control chip is electrically connected to the shake detection apparatus, the first image stabilization mechanism, and the second image stabilization mechanism. The main control chip is configured to: obtain, based on the shake information detected by the shake detection apparatus, drive information corresponding to shake compensation information of the first image stabilization mechanism, and send the drive information of the first image stabilization mechanism to the first image stabilization mechanism. Alternatively, the main control chip is configured to: obtain, based on the shake information detected by the shake detection apparatus, drive information corresponding to shake compensation information of the second image stabilization mechanism, and send the drive information of the second image stabilization mechanism to the second image stabilization mechanism. Alternatively, the main control chip is configured to: obtain, based on the shake information detected by the shake detection apparatus, the drive information corresponding to the shake compensation information of the first image stabilization mechanism and the drive information corresponding to the shake compensation information of the second image stabilization mechanism, send the drive information of the first image stabilization mechanism to the first image stabilization mechanism, and send the drive information of the second image stabilization mechanism to the second image stabilization mechanism. The first image stabilization mechanism is configured to drive, based on the drive information sent by the main control chip, the image sensor to move in the direction perpendicular to the optical axis of the lens group or rotate around the direction of the optical axis of the lens group. The second image stabilization mechanism is configured to drive, based on the drive information sent by the main control chip, the camera assembly to move in the direction perpendicular to the optical axis of the lens group or rotate around the direction of the optical axis of the lens group. Therefore, the camera module in this embodiment of this application may drive, based on different shake situations, the first image stabilization mechanism and the second image stabilization mechanism to separately perform image stabilization motion compensation, or may drive both the first image stabilization mechanism and the second image stabilization mechanism to perform image stabilization motion compensation, to meet different image stabilization requirements.

In addition, in some embodiments of this application, the first image stabilization mechanism includes a heating apparatus, memory alloy strips, and a first drive chip. The memory alloy strips are connected to the heating apparatus and the image sensor. The heating apparatus heats the memory alloy strips, so that the memory alloy strips are elongated or shortened, and drives the image sensor to move in the direction perpendicular to the optical axis of the lens group or rotate around the direction of the optical axis of the lens group. The first drive chip is electrically connected to the main control chip and the heating apparatus. The first drive chip is configured to control an input current of the heating apparatus based on the drive information sent by the main control chip, to control a distance by which the memory alloy is elongated or shortened. In this way, the memory alloy strips are controlled, so that the image sensor can be driven to accurately reach a preset compensation position corresponding to the drive information. The distance by which the memory alloy is elongated and the distance by which the memory alloy is shortened may be accurately controlled, so that image stabilization effect is good.

In addition, in some embodiments of this application, the first image stabilization mechanism further includes a first position detection apparatus. The first position detection apparatus may be specifically a position sensor. The first position detection apparatus is mounted to the image sensor, and is configured to detect position information of the image sensor. The main control chip is electrically connected to the first position detection apparatus. The main control chip is configured to determine, based on the position information detected by the first position detection apparatus, whether to send compensation drive information to the first drive chip, so that the memory alloy strips drive the image sensor to reach a first preset shake compensation position. The first preset shake compensation position is a compensation position that corresponds to the drive information of the main control chip and that the image sensor needs to reach. The first position detection apparatus may detect the position information of the image sensor in real time and feed back the position information to the main control chip, to implement position feedback control of the image sensor, so as to ensure that the image sensor may accurately reach the first preset shake compensation position.

For a structure of the second image stabilization mechanism, in some embodiments, the second image stabilization mechanism includes a voice coil motor and a second drive chip. The voice coil motor includes a magnet and a magnetic piece that are disposed opposite to each other. The magnet is mounted to one of the casing and the camera assembly, and the magnetic piece is mounted to the other one of the casing and the camera assembly. The magnet magnetically mates with the magnetic piece, to drive the camera assembly to move in the direction perpendicular to the optical axis of the lens group or rotate around the direction of the optical axis of the lens group. The second drive chip is electrically connected to the magnetic piece in the voice coil motor. The second drive chip is specifically configured to control an input current of the magnetic piece in the voice coil motor based on the drive information sent by the main control chip, to adjust a magnetic force generated by the magnetic piece. In this way, a distance that the magnet is attracted or repelled by the magnetic piece to move is controlled, so that a movement distance or a rotation angle of the camera assembly is changed. Similarly, the second drive chip may drive, by controlling the voice coil motor, the camera assembly to accurately reach a preset compensation position corresponding to the drive information. The magnetic force generated by the magnetic piece may be accurately controlled, so that the image stabilization effect is good.

In some implementations of this application, the second image stabilization mechanism includes a second position detection apparatus. The second position detection apparatus may be specifically a position sensor. The second position detection apparatus is mounted to the camera assembly, and is configured to detect position information of the camera assembly. The main control chip is electrically connected to the second position detection apparatus. The main control chip is configured to determine, based on the position information detected by the second position detection apparatus, whether to send compensation drive information to the second drive chip, so that the second drive chip drives the camera assembly to reach a second preset shake compensation position. The second preset shake compensation position is a compensation position that corresponds to the drive information of the main control chip and that the camera assembly needs to reach. The second position detection apparatus may detect the position information of the camera assembly in real time and feed back the position information to the main control chip, to implement position feedback control of the camera assembly, so as to ensure that the camera assembly may accurately reach the second preset shake compensation position.

According to a second aspect, an embodiment of this application further includes a control method for the camera module in the foregoing embodiment. The control method includes the following control steps:
obtaining current shake information of an electronic device in which the camera module is located;
searching, based on the current shake information, a mapping model between shake information, and compensation information of a first image stabilization mechanism and compensation information of a second image stabilization mechanism, and obtaining compensation information that is of the first image stabilization mechanism and that corresponds to the current shake information and/or compensation information that is of the second image stabilization mechanism and that corresponds to the current shake information;
calculating drive information of the first image stabilization mechanism based on the compensation information of the first image stabilization mechanism, and driving, by the first image stabilization mechanism based on the drive information of the first image stabilization mechanism, an image sensor to move in a direction perpendicular to an optical axis of a lens group or rotate around a direction of the optical axis of the lens group; and
calculating drive information of the second image stabilization mechanism based on the compensation information of the second image stabilization mechanism, and driving, by the second image stabilization mechanism based on the drive information of the second image stabilization mechanism, a camera assembly to move in the direction perpendicular to the optical axis of the lens group or rotate around the direction of the optical axis of the lens group.

The control method for the camera module is performed, so that the camera module can implement good shake compensation effect, and has good high-frequency shake compensation effect.

Based on the foregoing description, in some embodiments of this application, the searching, based on the current shake information, a mapping model between shake information, and compensation information of a first image stabilization mechanism and compensation information of a second image stabilization mechanism, and obtaining compensation information that is of the first image stabilization mechanism and that corresponds to the current shake information and/or compensation information that is of the second image stabilization mechanism and that corresponds to the current shake information specifically includes:
when the current shake information is that the electronic device performs translation, and a translation amount is less than or equal to a maximum stroke value of the first image stabilization mechanism, searching the mapping model between shake information, and compensation information of a first image stabilization mechanism and compensation information of a second image stabilization mechanism, and obtaining the compensation information of the first image stabilization mechanism;
when the current shake information is that the electronic device performs translation, and the translation amount is greater than the maximum stroke value of the first image stabilization mechanism, searching the mapping model between shake information, and compensation information of a first image stabilization mechanism and compensation information of a second image stabilization mechanism, and obtaining the compensation information of the first image stabilization mechanism and the compensation information of the second image stabilization mechanism;
when the current shake information is that the electronic device performs pitch rotation or yaw rotation, and a rotation angle is less than or equal to a maximum stroke angle of the second image stabilization mechanism, searching the mapping model between shake information, and compensation information of a first image stabilization mechanism and compensation information of a second image stabilization mechanism, and obtaining the compensation information of the second image stabilization mechanism;
when the current shake information is that the electronic device performs pitch rotation or yaw rotation, and the rotation angle is greater than the maximum stroke angle of the second image stabilization mechanism, searching the mapping model between shake information, and compensation information of a first image stabilization mechanism and compensation information of a second image stabilization mechanism, and obtaining the compensation information of the first image stabilization mechanism and the compensation information of the second image stabilization mechanism; and
when the current shake information is that the electronic device performs roll rotation, searching the mapping model between shake information, and compensation information of a first image stabilization mechanism and compensation information of a second image stabilization mechanism, and obtaining the compensation information of the first image stabilization mechanism and/or the compensation information of the second image stabilization mechanism.

According to a third aspect, an embodiment of this application further includes an electronic device. The electronic device includes a housing and the camera module in the foregoing embodiment. The camera assembly is mounted in the housing. Because the camera module in the electronic device in this embodiment of this application and the camera module in the foregoing embodiment have a same structure, can resolve a same technical problem, and obtain same technical effect, details are not described herein again.

### BRIEF DESCRIPTION OF DRAWINGS

To describe technical solutions in embodiments of this application, the following describes accompanying drawings that need to be used in embodiments of this application.
FIG. 1 is a front three-dimensional diagram of an electronic device, which is a mobile phone, according to an embodiment of this application;
FIG. 2 is a rear three-dimensional diagram of an electronic device, which is a mobile phone, according to an embodiment of this application;
FIG. 3 is a partial exploded view of an electronic device, which is a mobile phone, according to an embodiment of this application;
FIG. 4 is a diagram of a structure of some components of a camera module in an electronic device according to an embodiment of this application;
FIG. 5 is a diagram of shakes of an electronic device according to an embodiment of this application;
FIG. 6 is a diagram of imaging of an electronic device that does not have a shake structure;
FIG. 7 is a diagram of shake compensation of a camera module in a first conventional technology;
FIG. 8 is a diagram of shake compensation of a camera module in a second conventional technology;
FIG. 9 is a first diagram of a structure of a camera module in an electronic device according to an embodiment of this application;
FIG. 10 is a diagram of shake compensation of a camera module in a third conventional technology;
FIG. 11 is a diagram of imaging after a camera module in an electronic device performs shake compensation according to an embodiment of this application;
FIG. 12 is a second diagram of a structure of a camera module in an electronic device according to an embodiment of this application;
FIG. 13 is a diagram of a structure in which a camera module in an electronic device has a first drive mechanism according to an embodiment of this application;
FIG. 14 is a diagram of a structure in which a camera module in an electronic device has a second drive mechanism according to an embodiment of this application; and
FIG. 15A, FIG. 15B, FIG. 15C, and FIG. 15D are a schematic flowchart of a control method for a camera module in an electronic device according to an embodiment of this application.

### Reference numerals:

1000: Electronic device; 100: Display; 200: Housing; 201: Middle frame; 202: Rear housing; 2021: Mounting hole; 300: Main control circuit board: 400: Camera module; 1: Casing; 2: Camera assembly; 21: Lens group; 22: Image sensor; 23: First image stabilization mechanism; 231: Heating apparatus; 232: Memory alloy strip; 233: First drive chip; 234: First position detection apparatus; 24: Second image stabilization mechanism; 241: Voice coil motor; 2411: Magnet; 2412: Magnetic piece; 242: Second drive chip; 243: Second position detection apparatus; 25: Shake detection apparatus; 26: Main control chip.

### DESCRIPTION OF EMBODIMENTS

To make objectives, technical solutions, and advantages of this application clearer, the following further describes this application in detail with reference to the accompanying drawings.

Hereinafter, terms such as "first" and "second" are merely intended for a purpose of description, and cannot be understood as an indication or implication of relative importance or implicit indication of a quantity of indicated technical features. Therefore, a feature limited by "first ", "second", or the like may explicitly indicate or implicitly include one or more such features. In descriptions of this application, unless otherwise specified, "a plurality of" means two or more than two.

In addition, in this application, orientation terms such as "up", "down", "left", "right", "horizontal", and "vertical" are defined relative to orientations in which components are schematically placed in the accompanying drawings. It should be understood that these directional terms are relative concepts that are used for relative description and clarification, and may vary accordingly based on changes of the orientations in which the components are placed in the accompanying drawings.

In this application, unless otherwise specified and limited, the term "connection" should be understood in a broad sense. For example, the term "connection" may be a connection of a mechanical structure or a connection of a physical structure. For example, the "connection" may be a fixed connection, a detachable connection, or an integrated connection; or the "connection" may be a direct connection, or an indirect connection through an intermediate medium. The "connection" may also be understood as a form in which components are physically in contact and electrically conductive, or may be understood as a form in which different components in a line structure are connected through a physical line that may transmit an electrical signal, such as a PCB copper foil or a conducting wire.

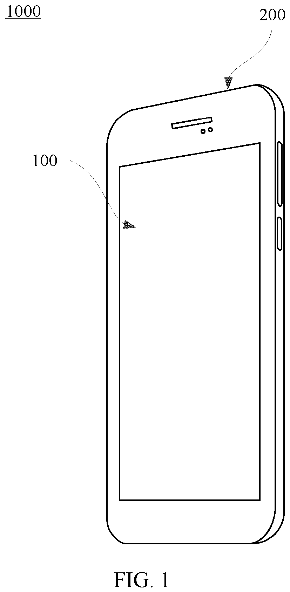

Embodiments of this application include an electronic device. The electronic device includes various devices having a camera module. For example, the electronic device includes a mobile phone, a tablet computer (tablet personal computer), a laptop computer (laptop computer), a personal digital assistant (personal digital assistant, PDA), a vehicle-mounted device, a wearable device (such as a smartwatch, a smart band, smart glasses, a smart helmet, a smart headband, or a smart cane), a video surveillance device, and the like. A specific form of the electronic device is not specially limited in embodiments of this application. For ease of description, the following uses an example in which the electronic device is a smartwatch shown in FIG. 1 for description.

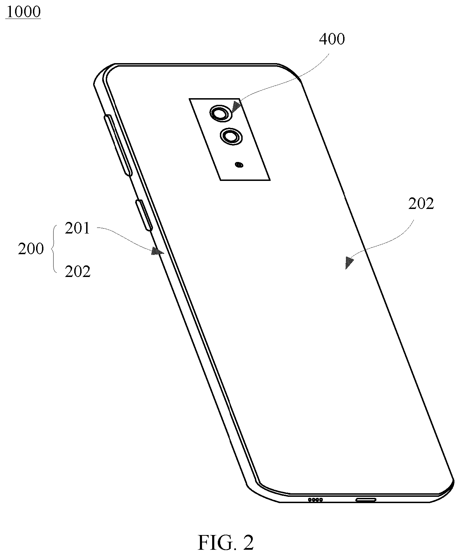

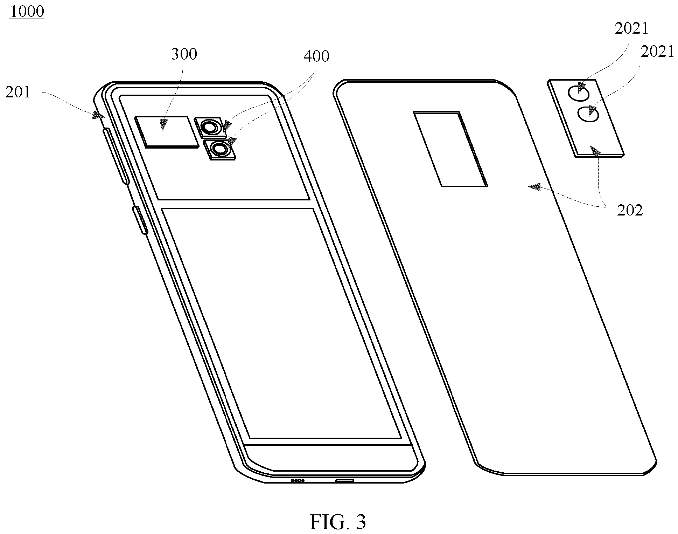

FIG. 1 is a front three-dimensional diagram of an electronic device according to some embodiments of this application. FIG. 2 is a rear three-dimensional diagram of an electronic device according to some embodiments of this application. FIG. 3 is a schematic exploded view of some components of an electronic device according to some embodiments of this application. It can be learned from the foregoing description that, in this embodiment, an electronic device 1000 is a mobile phone. The electronic device 1000 may include a display 100, a housing 200, a main control circuit board 300 fastened on the housing 200, and a camera module 400 mounted to the housing 200. The display 100 is mounted to the housing 200. The display 100 is configured to display image information and/or text information output by the main control circuit board 300. The housing 200 includes a middle frame 201 and a rear housing 202. The display 100 is mounted at an opening on one side of the middle frame 201, and the rear housing 202 is mounted at an opening on the other side of the middle frame 201. Both the main control circuit board 300 and the camera module 400 are disposed in space enclosed by the display 100, the middle frame 201, and the rear housing 202. In addition, a position that is on the rear housing 202 and that corresponds to the camera module 400 is provided with a mounting hole 2021, and the camera module 400 is mounted in the mounting hole 2021. In addition, the camera module 400 may receive, through the mounting hole 2021, light emitted from an external environment, to implement image shooting. An image shot by the camera module 400 may be displayed by using the display 100.

It should be noted that, in addition to functions such as shooting a photo and a video, the camera module 400 may further implement functions such as facial recognition unlocking, facial recognition payment, QR code scanning authentication, and QR code scanning payment. The camera module 400 may be a rear-facing camera module shown in FIG. 2, or may be a front-facing camera module, or may be a camera module that pops up from the middle frame 201. This is not limited in this embodiment of this application. The following describes a structure of the camera module 400 in detail with reference to the accompanying drawings.

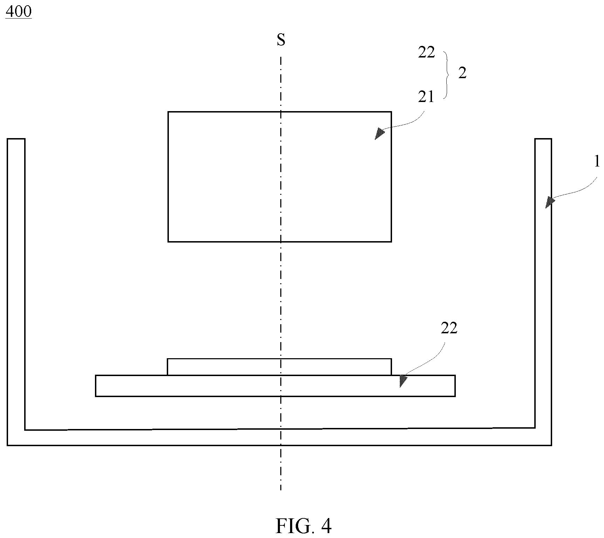

In some embodiments of this application, as shown in FIG. 4, the camera module 400 includes a casing 1 and a camera assembly 2. The camera assembly 2 includes a lens group 21 and an image sensor 22. Both the lens group 21 and the image sensor 22 are disposed in the casing 1. In addition, the image sensor 22 and the lens group 21 are disposed opposite to and spaced from each other in a direction parallel to an optical axis S of the lens group 21. The lens group 21 may include a plurality of lenses. The plurality of lenses may correct light, focus the light, filter the light, and the like with each other. When the light passes through the lens group 21, the plurality of lenses may filter out stray light in the light and correct a propagation path of the light, to optimize imaging effect of a lens assembly. The image sensor 22 converts an optical image on a light-sensitive surface into an electrical signal in a corresponding proportion to the optical image by using an optical-to-electrical conversion function of an optoelectronic device. The light-sensitive surface of the image sensor 22 may receive light emitted by the lens group 21, and convert an optical signal into an electrical signal, to implement an imaging function of the camera module 400.

It should be noted that the lenses in the lens group 21 may be glass lenses, or may be plastic lenses. This is not limited in this application. The image sensor 22 may be a charge-coupled device (charge-coupled device, CCD) image sensor, or may be a complementary metal oxide semiconductor (complementary metal oxide semiconductor, CMOS) image sensor. This is not limited in this application.

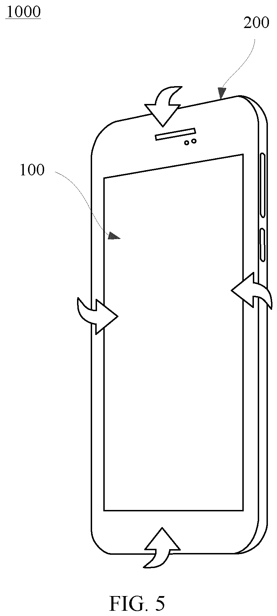

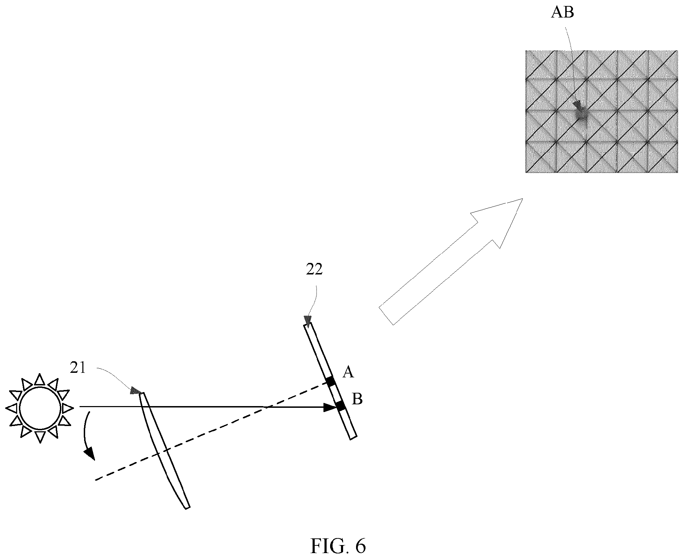

Refer to FIG. 5 and FIG. 6. When shooting is performed by using a mobile phone, due to a problem of hand shaking, an out-of-focus photo with a blurred image (a point AB in FIG. 6) is usually taken or a video with a severe image shake is usually recorded. Arrows in FIG. 5 represent shake directions of the mobile phone. To resolve this problem, an image stabilization structure used for optical image stabilization (optical image stabilization, OIS) is disposed in the camera module 400.

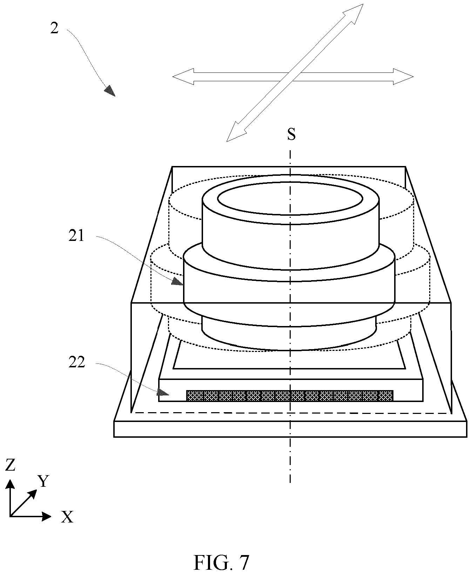

FIG. 7 is a diagram of image stabilization performed on the lens group 21 by using an image stabilization structure in a conventional technology. Arrows in FIG. 7 represent movement directions of the lens group 21, and a dashed line part represents that the lens group 21 moves to a compensation position under an action of the image stabilization structure. The image stabilization structure is connected to the lens group 21 in a transmission manner. The image stabilization structure may drive the lens group 21 to move in a direction perpendicular to the optical axis S, to resolve a problem of low image quality caused by a hand shaking problem. However, in an image stabilization process, a movement of the lens group 21 causes a change in relative positions of the lens group 21 and the image sensor 22. Consequently, a decrease in imaging quality at four corner-fields of view of the lens group 21 and deterioration of edge image quality are caused.

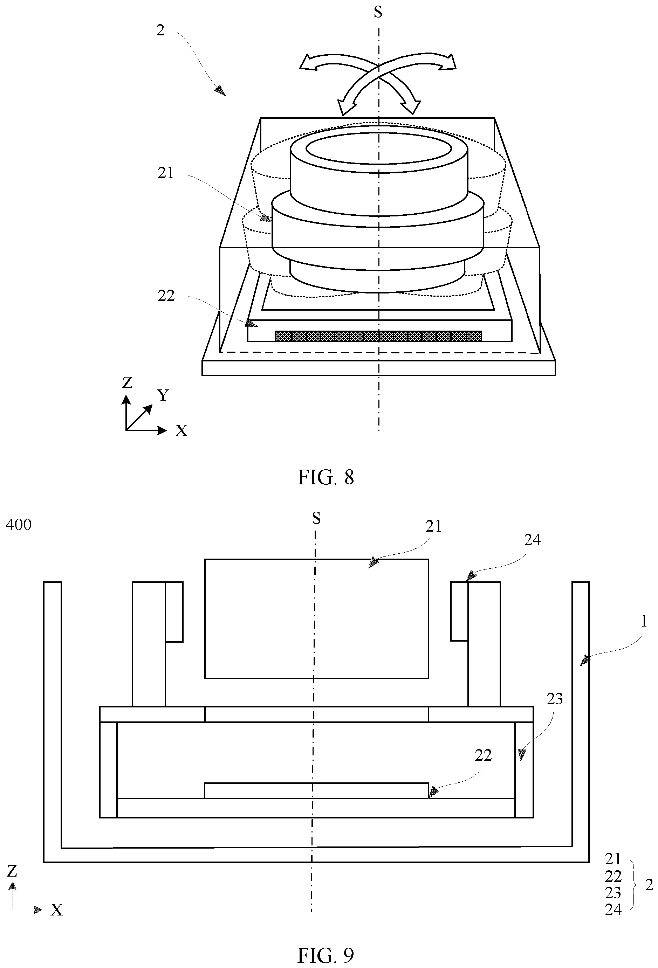

Similarly, FIG. 8 shows an image stabilization structure in another conventional technology. Arrows in FIG. 8 represent movement directions of the lens group 21, and a dashed line part represents that the lens group 21 moves to a compensation position under an action of the image stabilization structure. The image stabilization structure is also connected to the lens group 21 in a transmission manner. A difference lies in that the image stabilization structure may drive the lens group 21 to rotate around the optical axis S of the lens group 21, to resolve a problem of low image quality caused by hand shaking. However, in an image stabilization process, rotation of the lens group 21 causes the change in the relative positions of the lens group 21 and the image sensor 22. Consequently, a decrease in imaging quality at four corner-fields of view of the lens group 21 and deterioration of edge image quality are caused.

Therefore, to resolve, at the same time, low quality of an entire image caused by hand shaking, and the decrease in the imaging quality at the four corner-fields of view of the lens group 21 and the deterioration of the edge image quality, as shown in FIG. 9, the image stabilization structure of the camera module 400 in this embodiment of this application includes a first image stabilization mechanism 23 and a second image stabilization mechanism 24. Both the first image stabilization mechanism 23 and the second image stabilization mechanism 24 are disposed in the casing 1. In addition, the first image stabilization mechanism 23 is connected to the image sensor 22 in a transmission manner. The first image stabilization mechanism 23 is configured to drive the image sensor 22 to move in the direction perpendicular to the optical axis S of the lens group 21 or rotate around the direction of the optical axis S of the lens group 21. The second image stabilization mechanism 24 is connected to the camera assembly 2 in a transmission manner. The second image stabilization mechanism 24 is configured to drive the camera assembly 2 to move in the direction perpendicular to the optical axis S of the lens group 21 or rotate around the direction of the optical axis S of the lens group 21.

When the mobile phone implements an image stabilization function, the first image stabilization mechanism 23 only drives the image sensor 22 to move in the direction perpendicular to the optical axis S of the lens group 21 or rotate around the direction of the optical axis S of the lens group 21, and an optical axis S of the image sensor 22 and the optical axis S of the lens group 21 do not change. The second image stabilization mechanism 24 only drives the camera assembly 2 to move in the direction perpendicular to the optical axis S of the lens group 21 or rotate around the direction of the optical axis S of the lens group 21. The entire camera assembly 2 moves or rotates together, and the optical axis S of the image sensor 22 and the optical axis S of the lens group 21 do not change. Therefore, in an entire image stabilization process, neither the optical axis S of the image sensor 22 in the camera module nor the optical axis S of the lens group 21 in the camera module changes. Therefore, the decrease in the imaging quality at the four corner-fields of view of the lens group 21 and the deterioration of the edge image quality are avoided.

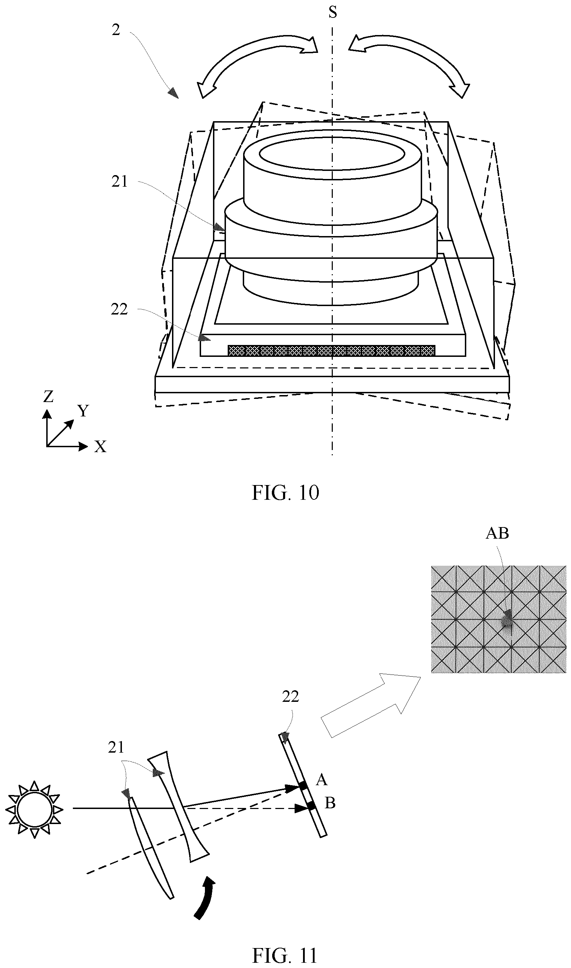

In addition, compared with image stabilization effect compensation performed by using only translation or rotation of the image sensor 22, by using only translation or rotation of the lens group 21, or by using only translation or rotation of the camera assembly 2 shown in FIG. 10, in this embodiment of this application, image stabilization effect compensation is performed by using the first image stabilization mechanism 23 to drive the image sensor 22 to translate or rotate and using the second image stabilization mechanism 24 to drive the camera assembly 2 to translate or rotate. The two image stabilization mechanisms are combined, so that good image stabilization effect can be achieved at a larger image stabilization angle. In addition, compared with a manner of driving both the camera assembly 2 and the lens group 21 to move to perform image stabilization effect compensation, in this embodiment of this application, a manner of driving both the camera assembly 2 and the image sensor 22 to move to perform image stabilization effect compensation is used. Because mass of the image sensor 22 is less than mass of the lens group 21, moment of inertia of the image sensor 22 is smaller. Therefore, the camera module 400 in this embodiment of this application has a stronger image stabilization capability for high-frequency shakes. FIG. 11 shows effect of image stabilization effect compensation performed by using the camera assembly according to an embodiment of this application. A point AB in FIG. 11 is clearer, and in particular, an edge is clearer.

For ease of the following description, an X, Y, Z coordinate system may be established in some accompanying drawings. A direction of an optical axis S of the camera module 400 in a mobile phone 100 shown in FIG. 10 may be a Z axis, a length direction of the camera module 400 may be a Y axis direction, and a width direction of the camera module 400 may be an X-axis direction. It may be understood that a width of the camera module 400 is less than a length of the camera module 400.

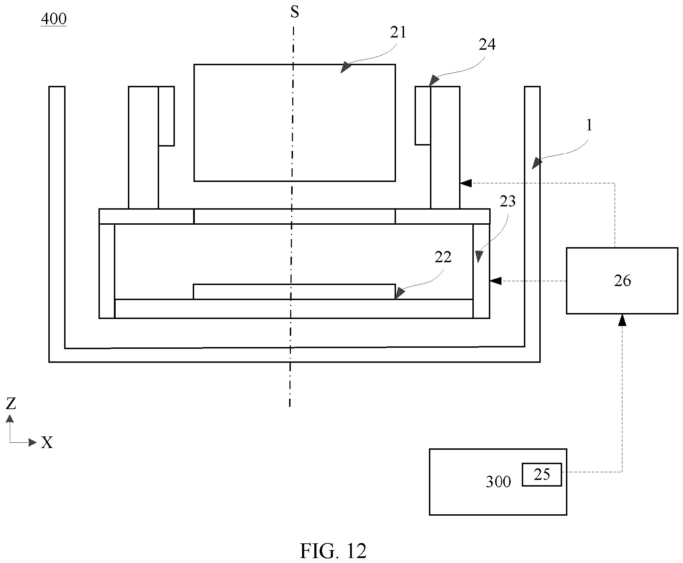

To implement automatic control of shake compensation, the camera module 400 further includes a shake detection apparatus 25 and a main control chip 26 shown in FIG. 12. The shake detection apparatus 25 may be specifically a gyroscope, an inertial sensor, or the like. The shake detection apparatus 25 is mounted to the mobile phone, and is configured to detect shake information of the mobile phone during shooting. For example, the shake detection apparatus 25 may be mounted to the casing 1 of the camera module 400, or may be mounted to the main control circuit board 300 of the mobile phone. The main control chip 26 is electrically connected to the shake detection apparatus 25, the first image stabilization mechanism 23, and the second image stabilization mechanism 24. Dashed lines "- - " in FIG. 12 represent electrical connections. The main control chip 26 may obtain, based on the shake information detected by the shake detection apparatus 25, drive information corresponding to shake compensation information of the first image stabilization mechanism 23, and send the drive information of the first image stabilization mechanism 23 to the first image stabilization mechanism 23. Alternatively, the main control chip 26 may obtain, based on the shake information detected by the shake detection apparatus 25, drive information corresponding to shake compensation information of the second image stabilization mechanism 24, and send the drive information of the second image stabilization mechanism 24 to the second image stabilization mechanism 24. Alternatively, the main control chip 26 may obtain, based on the shake information detected by the shake detection apparatus 25, the drive information corresponding to the shake compensation information of the first image stabilization mechanism 23 and the drive information corresponding to the shake compensation information of the second image stabilization mechanism 24, send the drive information of the first image stabilization mechanism 23 to the first image stabilization mechanism 23, and send the drive information of the second image stabilization mechanism 24 to the second image stabilization mechanism 24. Therefore, the camera module 400 in this embodiment of this application may drive, based on different shake situations, the first image stabilization mechanism 23 and the second image stabilization mechanism 24 to separately perform image stabilization motion compensation, or may drive both the first image stabilization mechanism 23 and the second image stabilization mechanism 24 to perform image stabilization motion compensation.

The following briefly describes structures of the first image stabilization mechanism 23 and the second image stabilization mechanism 24 in the foregoing camera module 400 with reference to specific embodiments.

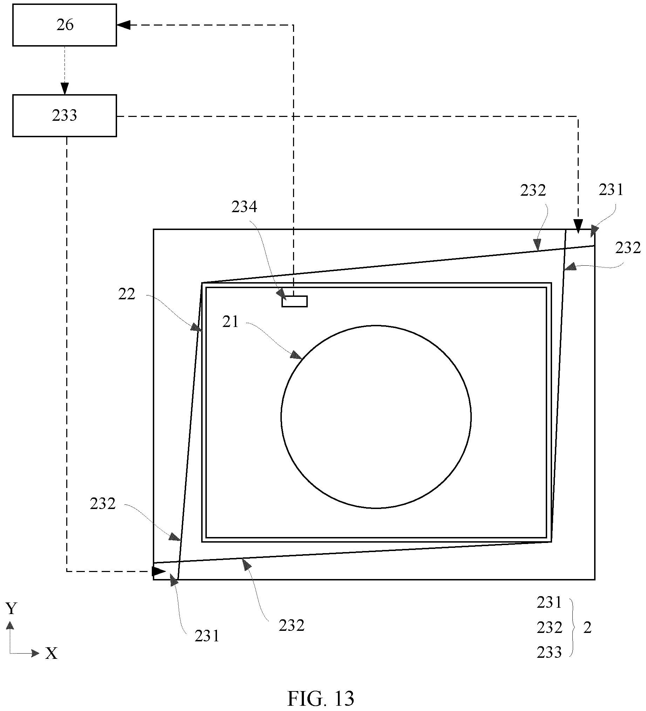

In some embodiments of this application, as shown in FIG. 13, the first image stabilization mechanism 23 includes a heating apparatus 231, memory alloy strips 232, and a first drive chip 233. The heating apparatus 231 is connected to the memory alloy strips 232, and the memory alloy strips 232 are connected to the image sensor 22. The heating apparatus 231 may heat the memory alloy strips 232, so that the memory alloy is elongated or shortened, to drive the image sensor 22 connected to the memory alloy strips 232 to move in the direction perpendicular to the optical axis S of the lens group 21 or rotate around the direction of the optical axis S of the lens group 21. The first drive chip 233 is electrically connected to the main control chip 26 and the heating apparatus 231. Dashed lines "- - " in FIG. 13 represent electrical connections. The main control chip 26 sends the drive information of the first image stabilization mechanism 23 obtained through calculation to the first drive chip 233. The first drive chip 233 controls an input current of the heating apparatus 231 based on the drive information sent by the main control chip 26, to control a distance by which the memory alloy strips 232 are elongated or shortened. In this way, the memory alloy strips 232 are controlled, so that the image sensor 22 can be driven to accurately reach a preset compensation position corresponding to the drive information. The distance by which the memory alloy strips 232 are elongated and the distance by which the memory alloy strips 232 are shortened may be accurately controlled, so that image stabilization effect is good.

In addition, in some embodiments of this application, there are a plurality of memory alloy strips 232 in the first image stabilization mechanism 23. As shown in FIG. 13, there are four memory alloy strips 232. The four memory alloy strips 232 may enclose or approximately enclose a rectangular ring, and the image sensor 22 may be located in the rectangular ring. Alternatively, there may further be eight memory alloy strips 232 in the first image stabilization mechanism 23. In addition, the foregoing memory alloy strips may specifically be made of a shape memory alloy (shape memory alloy, SMA). It should be noted that the first image stabilization mechanism 23 may further include another component, for example, a fastening structure such as a support frame or a support base. The heating apparatus may be fastened and mounted to the fastening structure. This is not limited in this application.

Besides, for the first image stabilization mechanism 23, in addition to being driven by the memory alloy strips 232, the heating apparatus 231 and the memory alloy strips 232 in the first image stabilization mechanism 23 may also be mechanical parts based on a driving manner such as electromagnetic force driving, piezoelectric ceramic driving, or electrostatic force driving.

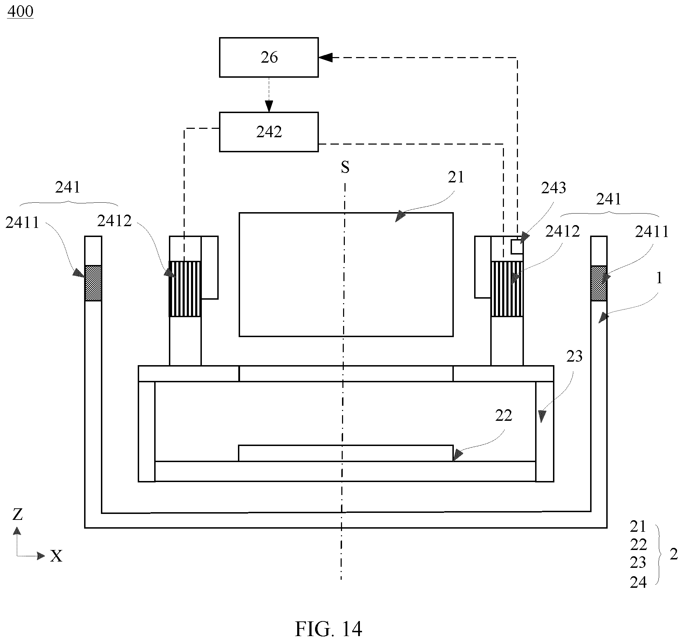

To accurately control the image sensor 22 to reach a preset shake compensation position under an action of the heating apparatus 231, in some embodiments of this application, the first image stabilization mechanism 23 includes a first position detection apparatus 234 shown in FIG. 14. The first position detection apparatus 234 is mounted to the image sensor 22. For example, the first position detection apparatus 234 is a position sensor. The first position detection apparatus 234 is configured to detect position information of the image sensor 22. The main control chip 26 is electrically connected to the first position detection apparatus 234. The main control chip 26 may determine, based on the position information detected by the first position detection apparatus 234, whether to send compensation motion information to the first drive chip 233, so that the memory alloy strips 232 drive the image sensor 22 to reach a first preset shake compensation position. The first preset shake compensation position is a compensation position that corresponds to the drive information of the main control chip 26 and that the image sensor 22 needs to reach. If the position information detected by the first position detection apparatus 234 indicates that the image sensor 22 does not reach the first preset shake compensation position, the main control chip 26 sends the compensation motion information to the first drive chip 233, and the heating apparatus 231 continues to heat the memory alloy strips 232 to drive the memory alloy strips 232 to be elongated or shortened, so as to drive the image sensor 22 to continue to move until the image sensor 22 reaches the first preset shake compensation position. If the position information detected by a second position detection apparatus 243 indicates that the image sensor 22 already reaches the first preset shake compensation position, the main control chip 26 does not need to send the compensation motion information to the first drive chip 233. In this way, the foregoing control steps are performed, to ensure that the image sensor 22 can accurately reach the first preset shake compensation position.

The foregoing describes structural composition of the first image stabilization mechanism 23 and a control method thereof. The following briefly describes the second image stabilization mechanism 24 with reference to specific embodiments.

In some embodiments of this application, as shown in FIG. 14, the second image stabilization mechanism 24 includes a voice coil motor (voice coil motor, VCM) 241 and a second drive chip 242. The voice coil motor 241 includes a magnet 2411 and a magnetic piece 2412. The magnet 2411 is mounted to one of the casing 1 and the camera assembly 2. The magnetic piece 2412 is mounted to the other one of the casing 1 and the camera assembly 2. In addition, the magnetic piece 2412 and the magnet 2411 are disposed opposite to each other. The magnetic piece 2412 may be specifically an electromagnet. The magnet 2411 magnetically mates with the magnetic piece 2412, to drive the camera assembly 2 to move in the direction perpendicular to the optical axis S of the lens group 21 or rotate around the direction of the optical axis S of the lens group 21. The second drive chip 242 is electrically connected to the magnetic piece 2412 in the voice coil motor 241. Dashed lines "- - " in FIG. 14 represent electrical connections. The second drive chip 242 is specifically configured to control an input current of the magnetic piece 2412 in the voice coil motor 241 based on the drive information sent by the main control chip 26, to adjust a magnitude of a magnetic force generated by the magnetic piece 2412. In this way, a distance that the magnet 2411 is attracted or repelled by the magnetic piece 2412 to move is controlled, so that a movement distance or a rotation angle of the camera assembly 2 is changed. Similarly, the second drive chip 242 may drive, by controlling the voice coil motor 241, the camera assembly 2 to accurately reach a preset shake compensation position corresponding to the drive information. The magnetic force generated by the magnetic piece 2412 may be accurately controlled, so that the image stabilization effect is good.

It should be noted that in some embodiments of this application, there may be a plurality of voice coil motors 241 in the second image stabilization mechanism 24, and the plurality of voice coil motors 241 may be symmetrically disposed along the optical axis S of the lens group 21. In addition, there may be a plurality of magnetic pieces 2412 and a plurality of magnets 2411 in the voice coil motor 241, and the plurality of magnetic pieces 2412 are in a one-to-one correspondence with the plurality of magnets 2411. Position distribution of the magnetic piece 2412 and the magnet 2411 is properly designed, so that the camera assembly 2 can move or rotate. In addition, the magnetic piece 2412 and the magnet 2411 may be connected by using a spring plate and a bearing, to improve connection strength between the magnetic piece 2412 and the magnet 2411.

Similarly, to accurately control the camera assembly 2 to reach the preset shake compensation position under an action of the voice coil motor 241, in some embodiments of this application, the second image stabilization mechanism 24 includes a second position detection apparatus 243. The second position detection apparatus 243 may be mounted to the camera assembly 2. For example, the second position detection apparatus 243 is a position sensor. In addition, the second position detection apparatus 243 is configured to detect position information of the camera assembly 2. The main control chip 26 is electrically connected to the second position detection apparatus 243. The main control chip 26 may determine, based on the position information detected by the second position detection apparatus 243, whether to send compensation motion information to the second drive chip 242, so that the second drive chip 242 can drive the camera assembly 2 to reach a second preset shake compensation position. The second preset shake compensation position is a compensation position that corresponds to the drive information of the main control chip 26 and that the camera assembly 2 needs to reach. If the position information detected by the second position detection apparatus 243 indicates that the camera assembly 2 does not reach the second preset shake compensation position, the main control chip 26 sends the compensation motion information to the second drive chip 242, to drive the camera assembly 2 to continue to move until the camera assembly 2 reaches second preset shake compensation position. If the position information detected by the second position detection apparatus 243 indicates that the camera assembly 2 already reaches the second preset shake compensation position, the main control chip 26 does not need to send the compensation motion information to the second drive chip 242. In this way, the foregoing control steps are performed, to ensure that the camera assembly 2 can accurately reach the second preset shake compensation position.

It should be noted that the second image stabilization mechanism 24 may further include another component, for example, a fastening structure such as a support frame or a support base. The fastening structure may be configured to fasten the magnet or the magnetic piece. This is not limited in this application.

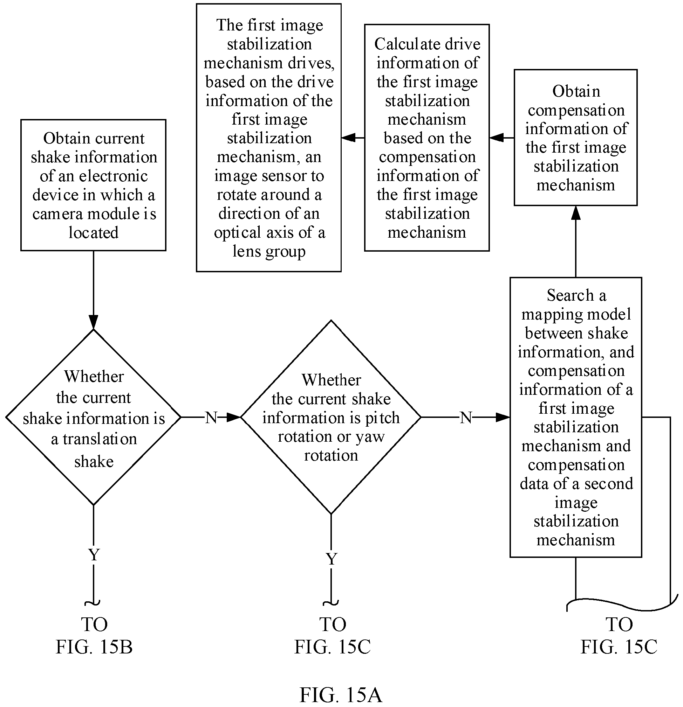

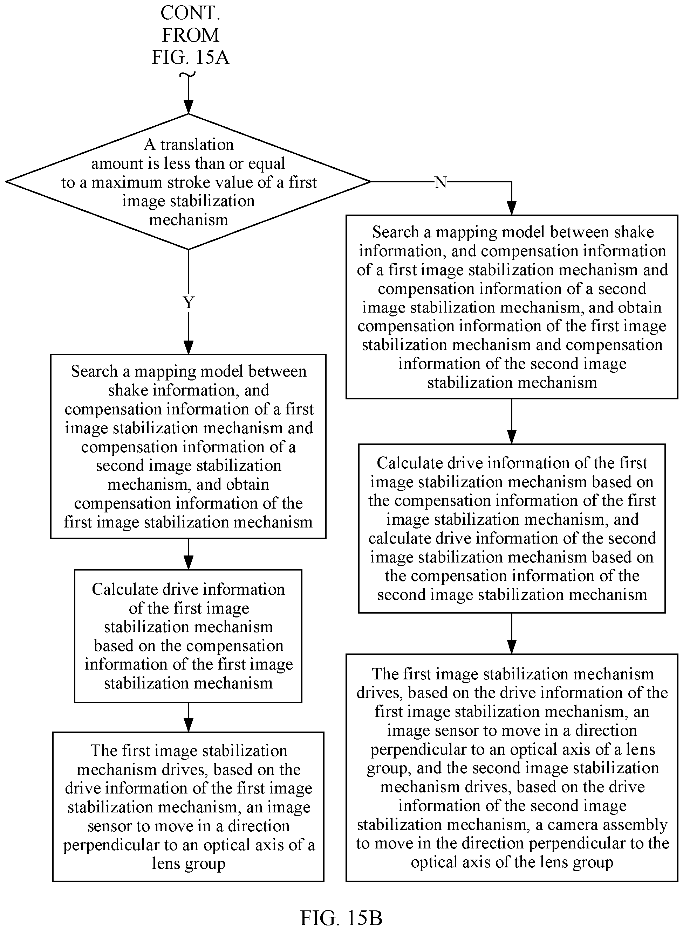

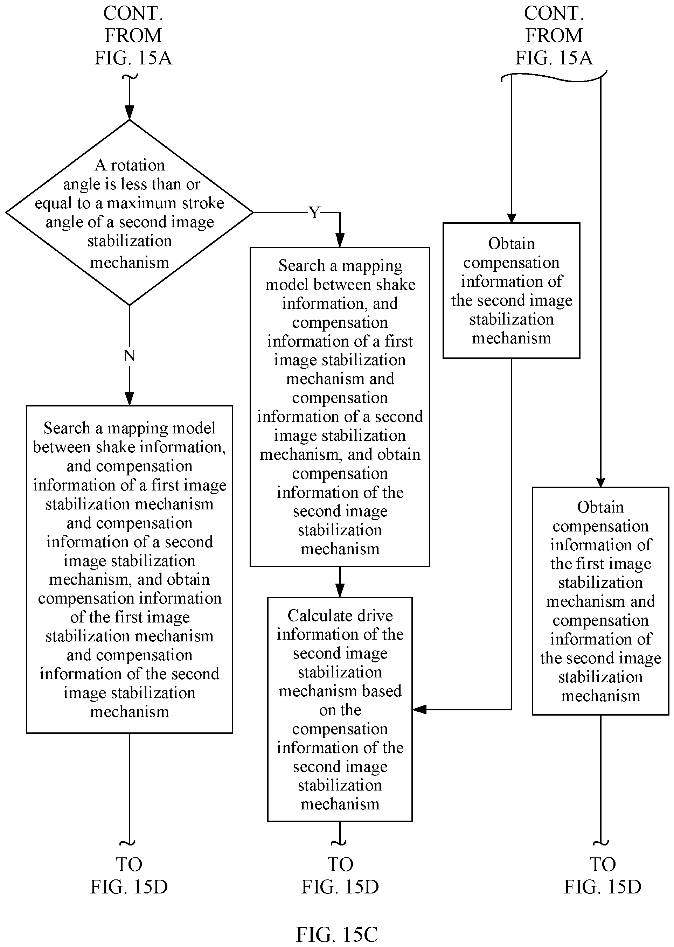

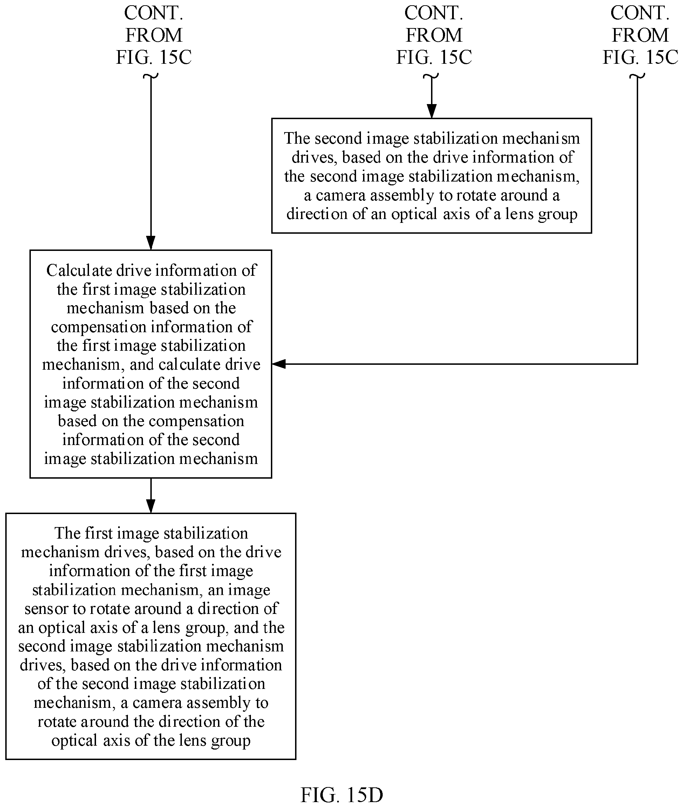

Based on a structure of the camera module 400, the camera module 400 in this embodiment of this application may perform the following control method to perform image stabilization motion compensation. Refer to FIG. 15A, FIG. 15B, FIG. 15C, and FIG. 15D. The control method includes the following steps.

S100: Obtain current shake information of an electronic device in which the camera module is located.

For example, a gyroscope or an inertial sensor in a mobile phone may detect shake information of the mobile phone during shooting. The shake information includes a shake amplitude, a shake direction, a shake speed, and the like of the mobile phone during shooting. The shake amplitude includes a shake displacement and a shake angle.

S200: Search, based on the current shake information of the camera assembly, a mapping model between shake information, and compensation information of a first image stabilization mechanism and compensation information of a second image stabilization mechanism, and obtain compensation information that is of the first image stabilization mechanism and that corresponds to the current shake information and/or compensation information that is of the second image stabilization mechanism and that corresponds to the current shake information.

For example, the main control chip 26 may include a storage module and a processing module. The storage module stores the mapping model between shake information, and compensation information of a first image stabilization mechanism 23 and compensation information of a second image stabilization mechanism 24. The compensation information includes compensation for translation displacement, compensation for a rotation angle, compensation for a motion direction, and the like. The processing module may search, based on the current shake information, the mapping model between shake information, and compensation information of a first image stabilization mechanism 23 and compensation information of a second image stabilization mechanism 24 in the storage module for the compensation information that is of the first image stabilization mechanism 23 and that corresponds to the current shake information, the compensation information that is of the second image stabilization mechanism 24 and that corresponds to the current shake information, or the compensation information that is of the first image stabilization mechanism 23 and that corresponds to the current shake information and the compensation information that is of the second image stabilization mechanism 24 and that corresponds to the current shake information. In other words, the compensation information that is in the mapping model in the storage module and that corresponds to the current shake information of the camera assembly 2 may be the compensation information of the first image stabilization mechanism 23, or may be the compensation information of the second image stabilization mechanism 24, or may be the compensation information of the first image stabilization mechanism 23 and the compensation information of the second image stabilization mechanism 24.

S300: Calculate drive information of the first image stabilization mechanism based on the compensation information of the first image stabilization mechanism, and drive, by the first image stabilization mechanism based on the drive information of the first image stabilization mechanism, an image sensor to move in a direction perpendicular to an optical axis of a lens group or rotate around a direction of the optical axis of the lens group; and calculate drive information of the second image stabilization mechanism based on the compensation information of the second image stabilization mechanism, and drive, by the second image stabilization mechanism based on the drive information of the second image stabilization mechanism, a camera assembly to move in the direction perpendicular to the optical axis of the lens group or rotate around the direction of the optical axis of the lens group.

For example, the processing module in the main control chip 26 may calculate the drive information of the first image stabilization mechanism 23 based on the compensation information of the first image stabilization mechanism 23, or may calculate the drive information of the second image stabilization mechanism 24 based on the compensation information of the second image stabilization mechanism 24. The drive information may be obtained by calculating and converting the compensation information of the first image stabilization mechanism 23 into the drive information of the first image stabilization mechanism 23 based on structural composition and a physical parameter of the first image stabilization mechanism 23. For example, the compensation information of the first image stabilization mechanism 23 is driving the image sensor 22 to translate by 200 µm. The main control chip 26 calculates, based on the driving the image sensor 22 to translate by 200 µm, that an input current of a heating apparatus is 120 mA. The main control chip 26 sends the drive information of the first image stabilization mechanism 23 obtained through calculation to a first drive chip 233 in the first image stabilization mechanism 23, and sends the drive information of the second image stabilization mechanism 24 obtained through calculation to a second drive chip 242 in the second image stabilization mechanism 24. Therefore, after receiving the drive information, the first drive chip 233 drives the image sensor 22 to perform corresponding motion compensation. For example, the first image stabilization mechanism 23 drives the image sensor 22 to move in the direction perpendicular to the optical axis S of the lens group 21 or rotate around the direction of the optical axis S of the lens group 21. After receiving the drive information, the second drive chip 242 drives the camera assembly 2 to perform corresponding motion compensation. For example, the second image stabilization mechanism 24 drives the camera assembly 2 to move in the direction perpendicular to the optical axis S of the lens group 21 or rotate around the direction of the optical axis S of the lens group 21.

In addition, in some embodiments of this application, still refer to FIG. 15A, FIG. 15B, FIG. 15C, and FIG. 15D. Step S200 specifically includes the following steps.

When the current shake information is that the electronic device performs translation, and a translation amount is less than or equal to a maximum stroke value of the first image stabilization mechanism 23, the mapping model between shake information, and compensation information of a first image stabilization mechanism 23 and compensation information of a second image stabilization mechanism 24 is searched, and obtaining the compensation information of the first image stabilization mechanism 23.

In some embodiments, when the current shake information is that the mobile phone translates along an X axis, and the translation amount is less than or equal to the maximum stroke value of the first image stabilization mechanism 23, the mapping model between shake information, and compensation information of a first image stabilization mechanism 23 and compensation information of a second image stabilization mechanism 24 is searched, and the compensation information of the first image stabilization mechanism 23 is obtained. Therefore, good shake compensation effect can be obtained by using only the first image stabilization mechanism 23 to drive the image sensor 22 to translate in a direction opposite to that of a shake of the mobile phone in an X-axis direction. For example, when the current shake information is that the mobile phone translates by 50 µm in a first direction of the X axis, the compensation information of the first image stabilization mechanism 23 is that the first image stabilization mechanism 23 drives the image sensor 22 to translate by 50 µm in a second direction of the X axis. The second direction is a direction opposite to the first direction. The maximum stroke value of the first image stabilization mechanism 23 may be stored in the storage module of the main control chip 26. Similarly, when the current shake information is that the mobile phone translates along a Y axis, and the translation amount is less than or equal to the maximum stroke value of the first image stabilization mechanism 23, the mapping model between shake information, and compensation information of a first image stabilization mechanism 23 and compensation information of a second image stabilization mechanism 24 is searched, and the compensation information of the first image stabilization mechanism 23 is obtained. Similarly, the good shake compensation effect can be obtained by using only the first image stabilization mechanism 23 to drive the image sensor 22 to translate in a direction opposite to that of a shake of the mobile phone in a Y-axis direction, and there is no need to drive the entire camera assembly 2 to move. Therefore, the first image stabilization mechanism 23 is particularly suitable for performing compensation in a high-frequency shake scenario in which the electronic device 1000 translates along the X axis or the Y axis. In addition, the maximum stroke value of the first image stabilization mechanism 23 on the X axis may be the same as or different from the maximum stroke value of the first image stabilization mechanism 23 on the Y axis. This is not limited in this application.

When the current shake information is that the electronic device performs translation, and the translation amount is greater than the maximum stroke value of the first image stabilization mechanism, the mapping model between shake information, and compensation information of a first image stabilization mechanism and compensation information of a second image stabilization mechanism is searched, and the compensation information of the first image stabilization mechanism and the compensation information of the second image stabilization mechanism are obtained.

In some embodiments, when the current shake information is that the mobile phone translates along the X axis, and the translation amount is greater than the maximum stroke value of the first image stabilization mechanism 23, it indicates that good image stabilization compensation effect cannot be achieved by using only the first image stabilization mechanism 23, and both the first image stabilization mechanism 23 and the second image stabilization mechanism 24 need to be used to perform compensation. Therefore, the mapping model between shake information, and compensation information of a first image stabilization mechanism 23 and compensation information of a second image stabilization mechanism 24 is searched, and the compensation information of the first image stabilization mechanism 23 and the compensation information of the second image stabilization mechanism 24 are obtained. In other words, compensation allocation solutions of the first image stabilization mechanism 23 and the second image stabilization mechanism 24 are obtained based on the mapping model between shake information, and compensation information of a first image stabilization mechanism 23 and compensation information of a second image stabilization mechanism 24. Therefore, based on the compensation information of the first image stabilization mechanism 23 and the compensation information of the second image stabilization mechanism 24, the first image stabilization mechanism 23 drives the image sensor 22 to translate by specific displacement along the X axis, and the second image stabilization mechanism 24 drives the entire camera assembly 2 to translate by specific displacement along the X axis. For example, the current shake information is that the mobile phone translates by 100 µm in the first direction of the X axis, and the maximum stroke value of the first image stabilization mechanism 23 is 70 µm. The mapping model between shake information, and compensation information of a first image stabilization mechanism 23 and compensation information of a second image stabilization mechanism 24 is searched. The compensation information of the first image stabilization mechanism 23 is that the first image stabilization mechanism 23 drives the image sensor 22 to translate by 70 µm in the second direction of the X axis, and the compensation information of the first image stabilization mechanism 23 is that the second image stabilization mechanism 24 drives the camera assembly 2 to translate by 30 µm in the second direction of the X axis. Therefore, it is ensured that when the current shake information exceeds the maximum stroke value of the first image stabilization mechanism 23, good shake compensation may also be performed on a shooting operation with the current shake information. Similarly, when the current shake information is that the mobile phone translates along the Y axis, and the translation amount is greater than the maximum stroke value of the first image stabilization mechanism 23, a control method for the camera assembly 2 is similar to the foregoing steps. Details are not described herein again.

When the current shake information is that the electronic device 1000 performs pitch (pitch) rotation or yaw (yaw) rotation, and a rotation angle is less than or equal to a maximum stroke angle of the second image stabilization mechanism 24, the mapping model between shake information, and compensation information of a first image stabilization mechanism 23 and compensation information of a second image stabilization mechanism 24 is searched, and the compensation information of the second image stabilization mechanism 24 is obtained.

In some embodiments, when the current shake information is that the mobile phone performs pitch rotation (around the X axis), and a rotation angle is less than or equal to the maximum stroke angle of the second image stabilization mechanism 24, the mapping model between shake information, and compensation information of a first image stabilization mechanism 23 and compensation information of a second image stabilization mechanism 24 is searched, and the compensation information of the second image stabilization mechanism 24 is obtained. Therefore, the good shake compensation effect can be obtained by using only the second image stabilization mechanism 24 to drive the camera assembly 2 to perform rotation compensation in a direction opposite to that of a pitch shake of the mobile phone. For example, if the current shake information is that the mobile phone performs pitch rotation by 0.3° in a third direction, the compensation information of the first image stabilization mechanism 23 is that the second image stabilization mechanism 24 drives the camera assembly 2 to perform pitch rotation by 0.3° in a fourth direction. The fourth direction is a direction opposite to the third direction. The maximum stroke angle of the second image stabilization mechanism 24 may be stored in the storage module of the main control chip 26. Similarly, when the current shake information is that the mobile phone performs yaw rotation (around the Y-axis), and a rotation angle is less than or equal to the maximum stroke angle of the second image stabilization mechanism 24, the mapping model between shake information, and compensation information of a first image stabilization mechanism 23 and compensation information of a second image stabilization mechanism 24 is searched, and the compensation information of the second image stabilization mechanism 24 is obtained. Similarly, the good shake compensation effect can be obtained by using only the second image stabilization mechanism 24 to drive the camera assembly 2 to perform rotation compensation in a direction opposite to that of a yaw shake of the mobile phone. Therefore, the second image stabilization mechanism 24 is particularly suitable for compensating for a scenario of high-frequency pitch or yaw shakes of the electronic device 1000. In addition, a maximum stroke angle of the second image stabilization mechanism 24 on the pitch angle may be the same as or different from a maximum stroke angle of the second image stabilization mechanism 24 on the yaw angle. This is not limited in this application. When the current shake information is that the electronic device 1000 performs pitch rotation or yaw rotation, and the rotation angle is greater than the maximum stroke angle of the second image stabilization mechanism 24, the mapping model between shake information, and compensation information of a first image stabilization mechanism 23 and compensation information of a second image stabilization mechanism 24 is searched, and the compensation information of the first image stabilization mechanism 23 and the compensation information of the second image stabilization mechanism 24 are obtained.

In some embodiments, when the current shake information is that the mobile phone performs pitch rotation, and the rotation angle is greater than the maximum stroke angle of the second image stabilization mechanism 24, it indicates that the good image stabilization compensation effect cannot be achieved by using only the second image stabilization mechanism 24, and both the first image stabilization mechanism 23 and the second image stabilization mechanism 24 need to be used to perform compensation. Therefore, the mapping model between shake information, and compensation information of a first image stabilization mechanism 23 and compensation information of a second image stabilization mechanism 24 is searched, and the compensation information of the first image stabilization mechanism 23 and the compensation information of the second image stabilization mechanism 24 are obtained. In other words, the required compensation allocation solutions of the first image stabilization mechanism 23 and the second image stabilization mechanism 24 are obtained based on the mapping model between shake information, and compensation information of a first image stabilization mechanism 23 and compensation information of a second image stabilization mechanism 24. Therefore, based on the compensation information of the first image stabilization mechanism 23 and the compensation information of the second image stabilization mechanism 24, the first image stabilization mechanism 23 drives the image sensor 22 to perform rotation compensation in the direction opposite to that of the pitch shake of the mobile phone, and the second image stabilization mechanism 24 drives the entire camera assembly 2 to perform rotation compensation in the direction opposite to that of the pitch shake of the mobile phone. For example, the current shake information is that the mobile phone performs pitch rotation by 0.7° in the third direction, and the maximum stroke angle of the first image stabilization mechanism 23 is 0.5°. The mapping model between shake information, and compensation information of a first image stabilization mechanism 23 and compensation information of a second image stabilization mechanism 24 is searched. The compensation information of the first image stabilization mechanism 23 is that the first image stabilization mechanism 23 drives the image sensor 22 to perform pitch rotation by 0.4° in the fourth direction. The compensation information of the second image stabilization mechanism 24 is that the second image stabilization mechanism 24 drives the entire camera assembly 2 to perform pitch rotation by 0.3° in the fourth direction. Therefore, it is ensured that when the current shake information exceeds the maximum stroke angle of the second image stabilization mechanism 24, the good shake compensation effect can also be implemented for the shooting operation with the current shake information. Similarly, when the current shake information is that the mobile phone performs yaw rotation, and the rotation angle is greater than the maximum stroke angle of the second image stabilization mechanism 24, the control method for the camera assembly 2 is similar to the foregoing steps. Details are not described herein again.

When the current shake information is that the electronic device 1000 performs roll rotation, the mapping model between shake information, and compensation information of a first image stabilization mechanism 23 and compensation information of a second image stabilization mechanism 24 is searched, and the compensation information of the first image stabilization mechanism 23, or the compensation information of the second image stabilization mechanism 24, or the compensation information of the first image stabilization mechanism 23 and the compensation information of the second image stabilization mechanism 24 are obtained.

For example, in the mapping model between shake information, and compensation information of a first image stabilization mechanism 23 and compensation information of a second image stabilization mechanism 24, the shake information is that the mobile phone performs roll rotation by different angles, and corresponds to compensation information of different image stabilization mechanisms. For example, the shake information is that the mobile phone performs roll rotation by 0.2° in a fifth direction, and the mapping model between shake information, and compensation information of a first image stabilization mechanism 23 and compensation information of a second image stabilization mechanism 24 is searched, and the compensation information of the first image stabilization mechanism 23 is obtained, where the compensation information of the first image stabilization mechanism 23 is driving the image sensor 22 to perform roll rotation by 0.2° in a sixth direction. The sixth direction is a direction opposite to the fifth direction. For another example, the shake information is that the mobile phone performs roll rotation by 0.35° in the sixth direction, and the mapping model between shake information, and compensation information of a first image stabilization mechanism 23 and compensation information of a second image stabilization mechanism 24 is searched, and the compensation information of the second image stabilization mechanism 24 is obtained, where the compensation information of the second image stabilization mechanism is driving the camera assembly 2 to perform roll rotation by 0.35° in the fifth direction. For another example, the shake information is that the mobile phone performs roll rotation by 0.68° in the fifth direction, and the mapping model between shake information, and compensation information of a first image stabilization mechanism 23 and compensation information of a second image stabilization mechanism 24 is searched, and the compensation information of the first image stabilization mechanism 23 and the compensation information of the second image stabilization mechanism 24 are obtained, where the compensation information of the first image stabilization mechanism 23 is driving the image sensor 22 to perform roll rotation by 0.42° in the sixth direction, and the compensation information of the second image stabilization mechanism 24 is driving the camera assembly 2 to perform roll rotation by 0.26° in the sixth direction.

Therefore, the camera module 400 in this embodiment of this application may automatically complete shake compensation on the camera module 400 by performing the foregoing control method, and may use different image stabilization compensation solutions based on different shakes, to implement five-axis (including the X axis, the Y axis, the pitch angle, the yaw angle, and the roll angle) motion compensation. In this way, it is ensured that the first image stabilization mechanism 23 and the second image stabilization mechanism 24 can implement the good shake compensation effect for the shooting operation of the mobile phone.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A camera module, comprising:
a casing, and the following components that are all disposed in the casing:
a camera assembly, wherein the camera assembly comprises a lens group and an image sensor, and the image sensor and the lens group are disposed opposite to and spaced from each other in a direction parallel to an optical axis of the lens group;
a first image stabilization mechanism, wherein the first image stabilization mechanism is connected to the image sensor in a transmission manner, and the first image stabilization mechanism is configured to drive the image sensor to move in a direction perpendicular to the optical axis of the lens group or rotate around a direction of the optical axis of the lens group; and
a second image stabilization mechanism, wherein the second image stabilization structure is connected to the camera assembly in a transmission manner, and the second image stabilization mechanism is configured to drive the camera assembly to move in the direction perpendicular to the optical axis of the lens group or rotate around the direction of the optical axis of the lens group.

2. The camera module according to claim 1, wherein the camera module further comprises:
a shake detection apparatus, wherein the shake detection apparatus is mounted to an electronic device in which the camera module is located, and is configured to detect shake information of the electronic device in which the camera module is located; and
a main control chip, wherein the main control chip is electrically connected to the shake detection apparatus, the first image stabilization mechanism, and the second image stabilization mechanism; the main control chip is configured to: obtain, based on the shake information detected by the shake detection apparatus, drive information corresponding to shake compensation information of the first image stabilization mechanism, and send the drive information of the first image stabilization mechanism to the first image stabilization mechanism, and/or obtain drive information corresponding to shake compensation information of the second image stabilization mechanism, and send the drive information of the second image stabilization mechanism to the second image stabilization mechanism;
the first image stabilization mechanism is specifically configured to drive, based on the drive information sent by the main control chip, the image sensor to move in the direction perpendicular to the optical axis of the lens group or rotate around the direction of the optical axis of the lens group; and
the second image stabilization mechanism is specifically configured to drive, based on the drive information sent by the main control chip, the camera assembly to move in the direction perpendicular to the optical axis of the lens group or rotate around the direction of the optical axis of the lens group.

3. The camera module according to claim 2, wherein the first image stabilization mechanism comprises:
a heating apparatus;
memory alloy strips, wherein the memory alloy strips are connected to the heating apparatus and the image sensor, the heating apparatus is connected to the heating apparatus and the image sensor, and the heating apparatus heats the memory alloy strips, so that the memory alloy strips are elongated or shortened, and drive the image sensor to move in the direction perpendicular to the optical axis of the lens group or rotate around the direction of the optical axis of the lens group; and
a first drive chip, wherein the first drive chip is electrically connected to the main control chip and the heating apparatus, and the first drive chip is configured to control an input current of the heating apparatus based on the drive information sent by the main control chip, to control a distance by which the memory alloy is elongated or shortened.

4. The camera module according to claim 3, wherein the first image stabilization mechanism further comprises:
a first position detection apparatus, wherein the first position detection apparatus is mounted to the image sensor, and is configured to detect position information of the image sensor;
the main control chip is electrically connected to the first position detection apparatus, and the main control chip is configured to determine, based on the position information detected by the first position detection apparatus, whether to send compensation drive information to the first drive chip, so that the memory alloy strips drive the image sensor to reach a first preset shake compensation position.

5. The camera module according to any one of claims 1 to 4, wherein the second image stabilization mechanism comprises:
a voice coil motor, wherein the voice coil motor comprises a magnet and a magnetic piece, the magnet is mounted to one of the casing and the camera assembly, the magnetic piece is mounted to the other one of the casing and the camera assembly and is disposed opposite to the magnet, and the magnet magnetically mates with the magnetic piece, to drive the camera assembly to move in the direction perpendicular to the optical axis of the lens group or rotate around the direction of the optical axis of the lens group; and
a second drive chip, wherein the second drive chip is electrically connected to the magnetic piece in the voice coil motor, and the second drive chip is specifically configured to control an input current of the magnetic piece in the voice coil motor based on the drive information sent by the main control chip, to control a distance that the magnet is attracted or repelled by the magnetic piece to move.

6. The camera module according to claim 5, wherein the second image stabilization mechanism comprises:
a second position detection apparatus, wherein the second position detection apparatus is mounted to the camera assembly, and is configured to detect position information of the camera assembly; and
the main control chip is electrically connected to the second position detection apparatus, and the main control chip is configured to determine, based on the position information detected by the second position detection apparatus, whether to send compensation drive information to the second drive chip, so that the voice coil motor drives the camera assembly to reach a second preset shake compensation position.

7. The camera module according to any one of claims 1 to 6, wherein the shake detection apparatus is an inertial sensor.

8. A control method for the camera module according to any one of claims 1 to 7, comprising the following control steps:
obtaining current shake information of an electronic device in which the camera module is located;
searching, based on the current shake information, a mapping model between shake information, and compensation information of a first image stabilization mechanism and compensation information of a second image stabilization mechanism, and obtaining compensation information that is of the first image stabilization mechanism and that corresponds to the current shake information and/or compensation information that is of the second image stabilization mechanism and that corresponds to the current shake information;
calculating drive information of the first image stabilization mechanism based on the compensation information of the first image stabilization mechanism, and driving, by the first image stabilization mechanism based on the drive information of the first image stabilization mechanism, an image sensor to move in a direction perpendicular to an optical axis of a lens group or rotate around a direction of the optical axis of the lens group; and
calculating drive information of the second image stabilization mechanism based on the compensation information of the second image stabilization mechanism, and driving, by the second image stabilization mechanism based on the drive information of the second image stabilization mechanism, a camera assembly to move in the direction perpendicular to the optical axis of the lens group or rotate around the direction of the optical axis of the lens group.

9. The control method for the camera module according to claim 8, wherein the searching, based on the current shake information, a mapping model between shake information, and compensation information of a first image stabilization mechanism and compensation information of a second image stabilization mechanism, and obtaining compensation information that is of the first image stabilization mechanism and that corresponds to the current shake information and/or compensation information that is of the second image stabilization mechanism and that corresponds to the current shake information specifically comprises:
when the current shake information is that the electronic device performs translation, and a translation amount is less than or equal to a maximum stroke value of the first image stabilization mechanism, searching the mapping model between shake information, and compensation information of a first image stabilization mechanism and compensation information of a second image stabilization mechanism, and obtaining the compensation information of the first image stabilization mechanism;
when the current shake information is that the electronic device performs translation, and the translation amount is greater than the maximum stroke value of the first image stabilization mechanism, searching the mapping model between shake information, and compensation information of a first image stabilization mechanism and compensation information of a second image stabilization mechanism, and obtaining the compensation information of the first image stabilization mechanism and the compensation information of the second image stabilization mechanism;
when the current shake information is that the electronic device performs pitch rotation or yaw rotation, and a rotation angle is less than or equal to a maximum stroke angle of the second image stabilization mechanism, searching the mapping model between shake information, and compensation information of a first image stabilization mechanism and compensation information of a second image stabilization mechanism, and obtaining the compensation information of the second image stabilization mechanism;
when the current shake information is that the electronic device performs pitch rotation or yaw rotation, and the rotation angle is greater than the maximum stroke angle of the second image stabilization mechanism, searching the mapping model between shake information, and compensation information of a first image stabilization mechanism and compensation information of a second image stabilization mechanism, and obtaining the compensation information of the first image stabilization mechanism and the compensation information of the second image stabilization mechanism; and
when the current shake information is that the electronic device performs roll rotation, searching the mapping model between shake information, and compensation information of a first image stabilization mechanism and compensation information of a second image stabilization mechanism, and obtaining the compensation information of the first image stabilization mechanism and/or the compensation information of the second image stabilization mechanism.

10. An electronic device, comprising a housing and the camera module according to any one of claims 1 to 7, wherein the camera module is mounted in the housing.
